# EUROPÄISCHE PATENTSCHRIFT

(11) **EP 2 126 323 B1**
(45) Veröffentlichungstag und Bekanntmachung des Hinweises auf die Patenterteilung: **09.03.2011**
(21) Anmeldenummer: 08707328.4
(22) Anmeldetag: 26.01.2008
(51) Int. Cl.: F02M 25/00, F01N 3/20, F02M 37/00, F01N 3/025, F01N 3/029

(54) **EINRICHTUNG ZUM ZUFÜHREN EINES FLÜSSIGEN ADDITIVS FÜR EINE BRENNKRAFTMASCHINE**
DEVICE FOR FEEDING A LIQUID ADDITIVE INTO AN INTERNAL COMBUSTION ENGINE
DISPOSITIF D'INTRODUCTION D'UN ADDITIF LIQUIDE POUR UN MOTEUR À COMBUSTION INTERNE

(30) Priorität: 01.02.2007 DE 102007005006
(43) Veröffentlichungstag der Anmeldung: 02.12.2009
(73) Patentinhaber: Bayerische Motoren Werke Aktiengesellschaft, 80809 München (DE)
(72) Erfinder: BRUHN, Andreas, 82178 Puchheim (DE); WACHTER, Jonas, 85399 Hallbergmoos (DE); STRATHOFF, Udo, 81249 München (DE); SCHNEIDER, Günther, 86576 Schiltberg (DE)
(86) Internationale Anmeldenummer: PCT/EP2008/000622
(87) Internationale Veröffentlichungsnummer: WO 2008/092613

(56) Entgegenhaltungen:
- EP-A- 0 928 884
- WO-A-2004/003371
- WO-A-2006/064028
- DE-A1- 3 230 608

## Beschreibung

Die Erfindung betrifft eine Einrichtung zum Zuführen eines flüssigen Additivs aus einem Behälter in eine Kraftstoffleitung oder in eine Abgasleitung einer Brennkraftmaschine nach dem Oberbegriff des ersten Anspruchs.

Bei Brennkraftmaschinen, insbesondere bei Dieselmotoren, ist es bereits bekannt, dem Kraftstoff oder dem Abgas ein Additiv zuzuführen, das zur Abgasreinigung beiträgt. Ein solches Additiv kann zum Beispiel die Entzündungstemperatur für Russpartikel zu deren Verbrennung absenken und bei der Russfilterreinigung in der Abgasanlage Verwendung finden. Diesen Stand der Technik beschreibt die DE 102 29 483 A1. Zur genaueren Dosierung des Additivs wird hier ein Additiv-Vorvolumen in einem zum Additivtank seperaten Behälter gebildet. Dieses Additiv-Vorvolumen wird mittels einer Saugstrahlpumpe dosiert der Kraftstoffleitung zugeführt.

Der nächstliegende Stand der Technik, die EP 0 928 884 A2, beschreibt eine Gemischabgabevorrichtung zur Einführung wenigstens eines Reduktionsmittels in ein Abgassystem einer Brennkraftmaschine, mit einem Reduktionsmittelvorratsbehälter, mit einer Druckgasquelle, mit einer Dosier- und Mischeinrichtung und mit einer stromabwärts der Dosier- und Mischeinrichtung am Abgassystem vorgesehenen Zerstäubereinrichtung. Diese Gemischabgabevorrichtung ist dadurch gekennzeichnet, dass zwischen dem Reduktionsmittelvorratsbehälter und der Dosier- und Mischeinrichtung ein Reduktionsmittelverbrauchsbehälter mit einem Volumen vorgesehen ist, das einem Bruchteil des Volumens des Reduktionsmittelvorratsbehälters entspricht. Aufgabe der Erfindung ist es, eine Einrichtung zum Zuführen eines flüssigen Additivs aus einem Behälter in eine Kraftstoffleitung oder in eine Abgasleitung einer Brennkraftmaschine so auszuführen, dass ein möglichst problemloser und sicherer Betrieb gewährleistet ist, bei einfachem Aufbau und unter allen Betriebsbedingungen.

Die Aufgabe wird mit den Merkmalen des Anspruchs 1 gelöst. Weitere Ausgestaltungen der Erfindung ergeben sich aus den abhängigen Ansprüchen.

Nach der Erfindung ist eine Einrichtung zum Zuführen eines flüssigen Additivs aus einem Behälter in eine Kraftstoffleitung oder in eine Abgasleitung einer Brennkraftmaschine eines Kraftfahrzeugs, mittels einer, in mindestens eine der vorgenannten Leitungen mündenden, absperrbaren Zuführleitung und mittels einer Pumpe, die mindestens zeitweilig einen Förderdruck in der Zuführleitung erzeugt und im Behälter oder zwischen dem Behälter und dem Abzweig der Zuführleitung in die Verbindungsleitung eingebaut ist, wobei der Behälter aus einem ebenfalls im Kraftfahrzeug untergebrachten größeren Vorratsbehälter über eine absperrbare Verbindungsleitung mit Additiv befüllbar ist, dadurch gekennzeichnet, dass die Zuführleitung zwischen dem Behälter und dem Vorratsbehälter von der Verbindungsleitung abzweigt und dass die Verbindungsleitung im Vorratsbehälter oder zwischen dem Vorratsbehälter und dem Abzweig der Zuführleitung absperrbar ist.

Das hat den Vorteil, dass sowohl die Zuführleitung, als auch der Behälter aus dem Vorratsbehälter, über die Verbindungsleitung mittels der Pumpe beschickt werden können. Die Verbindungsleitung, fungierend als Vorlaufleitung, führt vom Behälter zum Vorratsbehälter und kann dort zum Beispiel mittels eines T-Stücks an einem Magnetventil als weiterem Absperrventil und an der Zuführleitung angeschlossen sein. Das Befüllen des Behälters aus dem Vorratsbehälter erfolgt zum Beispiel im Steuergerätenachlauf. Dazu wird die Förderrichtung der Pumpe umgekehrt und das Magnetventil am Vorratsbehälter bei durch das Einspritzventil geschlossener Zuführleitung geöffnet. Erkennt der Füllstandsgeber, dass der Behälter gefüllt ist, wird das Magnetventil geschlossen und das Einspritzventil geöffnet, um die Leitung leer zu saugen.

Bei dieser vorteilhaften Ausführung der Erfindung ist die Förderrichtung der Pumpe umkehrbar. Dies vereinfacht auch den Aufbau der Einrichtung. Über ein Steuergerät können dabei vorteilhafterweise die Funktionen einerseits Zuführen von Additiv aus dem Behälter über das Einspritzventil in die Kraftstoffleitung oder die Abgasleitung der Brennkraftmaschine und andererseits Befüllen des Behälters aus dem Vorratsbehälter über die Änderung der Drehrichtung der Pumpe angesteuert werden.

Eine weitere vorteilhafte Ausführung der Erfindung sieht vor, dass die absperrbaren Leitungen mittels Absperrventilen, insbesondere Magnetventilen, absperrbar sind. Ebenfalls über das Steuergerät angesteuert, ist es so einfach möglich, die für die jeweilige Betriebssituation notwendigen Leitungen zu öffnen oder zu schliessen.

Eine bevorzugte Ausführung der Erfindung sieht vor, dass eine absperrbare Rücklaufleitung in den Behälter von der Verbindungsleitung oder der Zuführleitung zwischen der Pumpe und den Absperrventilen abzweigt. Zusammen mit einer Heizeinrichtung im Behälter, zur Erwärmung mindestens eines Teilvolumens des Additivs, wird dadurch ein nachhaltiges Heizkonzept realisiert, was notwendig ist, da zum Beispiel eine 32,5 % ige Harnstofflösung als Additiv bei etwa minus 11 Grad Celsius einfriert. Im Behälter, mit einem vorgesehenen Volumen von 5 bis 8 Litern, schmilzt das Heizelement zuerst eine Art höhlenförmiges Loch in die gefrorene Harnstofflösung. Wenn dann genug geschmolzenes Additiv zur Verfügung steht, kann durch die Pumpe über die Rücklaufleitung warmes Additiv auf die Oberfläche des gefrorenen Additivs im Behälter gefördert werden und damit wird dieses von oben abgeschmolzen. Aus diesem Grund ist es vorteilhaft, wenn die Verbindungsleitung in der Nähe der Heizeinrichtung, insbesondere im Bodenbereich, des Behälters endet und wenn die Rücklaufleitung oben im Behälter endet. So kann über Rücklaufleitung und Behälter ein Additivkreislauf entstehen, der das Heizelement beim Auftauen des Additivs unterstützt.

Weitere bevorzugte Ausführungsformen der Erfindung sehen vor, dass sowohl der Behälter, als auch der Vorratsbehälter mindestens eine verschliessbare, insbesondere von Hand und/oder selbst schließende, Nachfüllöffnung besitzen. Dadurch bleiben vorteilhafterweise verschiedene Vorgangsweisen offen zur Bewerkstellung der notwendigen Befüllaufgaben. Vor allem wenn die, insbesondere selbstschließende, Nachfüllöffnung als Kupplungsvorrichtung zur Verbindung mit einer Einfülleinrichtung ausgebildet ist, ist nachfolgend beschriebene Ausbildung der Einrichtung denkbar.

Der Vorratsbehälter für das Additiv ist nicht im Motorraum, sondern in einem Gepäck- oder Laderaum oder unter dem Kofferraum, statt oder in einer Ersatzradmulde, untergebracht und nicht beheizbar. Er hat ein Volumen zwischen 16 und 35 Litern, um jeweils nur im Serviceintervall beim Werkstattbesuch nachgefüllt werden zu müssen. Daher besitzt er eine selbst schließende Nachfüllöffnung, ausgebildet als Kupplungsvorrichtung für eine Einfülleinrichtung. Es ist so vorteilhafterweise eine stationäre Befüllung durch einen Betankungsschlauch möglich, bei der das Additiv abgeschlossen von der Umgebung eingefüllt wird. Eine Absaugeinrichtung, eine Füllstandsmess- bzw. -abschalteinrichtung und weitere Mittel können, ähnlich dem Stand der Technik bei Betankungsanlagen für Kraftstoffe, Verwendung finden. Bei der Benutzung des Kraftfahrzeugs muss der Vorratsbehälter vom Fahrer gewöhnlich nicht beachtet werden bzw. tritt für ihn nicht in Erscheinung.

Der Behälter für das Additiv dagegen ist im Motorraum untergebracht und mit dem Vorratsbehälter über die Verbindungsleitung verbunden. Er besitzt eine von Hand zu bedienende Nachfüllöffnung mit einem Schraubdeckel. Eine solche kundentaugliche Befüllmöglichkeit an dem gegenüber dem Vorratsbehälter relativ kleinen Behälter ist einfach und ohne Rohbauänderung vorzusehen und notwendig, zum Beispiel für den Fall, dass das Additiv im Vorratsbehälter einfriert und sich deshalb der Behälter aus dem Vorratsbehälter über die Pumpe nicht mehr befüllen lässt. In diesem Fall zeigt eine im Behälter vorhandene Füllstandsmesseinrichtung für das Additiv an, dass eine Nachfüllung des Behälters zum Beispiel durch den Fahrer gegeben ist. Es wird so vorteilhafterweise das Risiko eines Systemausfalls bei tiefen Temperaturen minimiert.

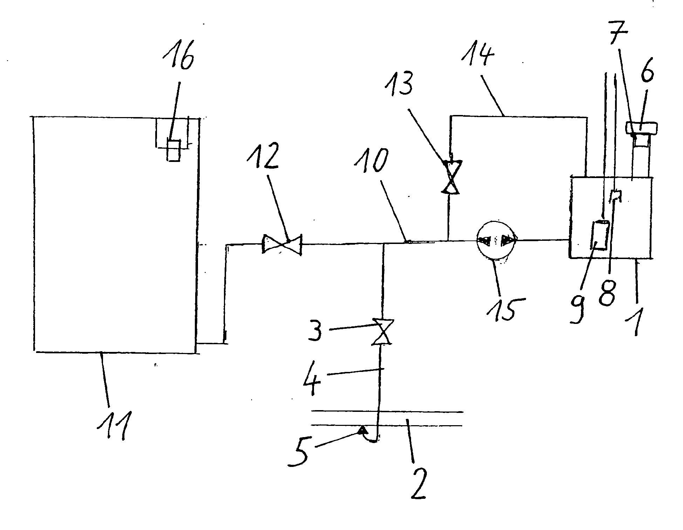

Ein bevorzugtes Ausführungsbeispiel der Erfindung ist in der nachfolgenden Beschreibung und der zugehörigen Zeichnung näher dargestellt. Dazu zeigt die einzige Figur in schematischer Darstellung eine erfindungsgemäße Einrichtung zum Zuführen eines flüssigen Additivs aus einem Behälter in eine Kraftstoffleitung oder in eine Abgasleitung einer Brennkraftmaschine eines Kraftfahrzeugs.

Die Figur zeigt die Einrichtung zum Zuführen einer unter dem Begriff AddBlue bekannten Harnstofflösung als flüssiges Additiv aus einem Behälter 1 in eine Abgasleitung 2 eines nicht gezeichneten Dieselmotors eines Kraftfahrzeugs. Eine durch ein Absperrventil 3 schließbare Zuführleitung 4 mündet über ein Einspritzventil 5 in die Abgasleitung 2. Dabei kann alternativ das Einspritzventil 5 auch die Funktion des Absperrventils 3 übernehmen, worauf dieses dann entfallen kann.

Der Behälter 1 ist im Motorraum untergebracht und besitzt eine von Hand durch einen Schraubdeckel 6 öffen- und verschliessbare Nachfüllöffnung 7, außerdem eine Füllstandsmesseinrichtung 8 für das Additiv und eine Heizeinrichtung 9 zur Erwärmung mindestens eines Teilvolumens des Additivs. In der Nähe der Heizeinrichtung 9, im Bodenbereich des Behälters 1 mündet eine Verbindungsleitung 10 in den Behälter 1. Diese verbindet einen unter dem Kofferraum, statt der Reserveradmulde, angebrachten Vorratsbehälter 11 für das Additiv mit dem Behälter 1 und ist ebenfalls mittels eines weiteren Absperrventils 12 verschließbar. Außerdem zweigt eine mittels eines zusätzlichen Absperrvenils 13 absperrbare, in den Behälter 1 mündende Rücklaufleitung 14 von der Verbindungsleitung 10 ab und zwischen deren Abzweig und dem Behälter 1 ist in die Verbindungsleitung 10 noch eine Pumpe 15 eingebaut, deren Förderrichtung umkehrbar ist.

Verschließt das weitere Absperrventil 12 die Verbindungsleitung 10 vor dem Vorratsbehälter 11 und das zusätzliche Absperrventil 13 verschließt die Rücklaufleitung 14, kann die Pumpe 15 einen Förderdruck in der Zuführleitung 4 erzeugen, der bei geöffnetem Absperrventil 3 das Einspritzen von Additiv in die Abgasleitung 2 über das Einspritzventil 5 ermöglicht. Durch ein nicht gezeichnetes Steuergerät, das auch das Motorsteuergerät sein kann, werden die Pumpe 15, die Absperrventile 3, 12, 13 und die Heizeinrichtung 9 angesteuert, abhängig von Sensorsignalen, Betriebsbedingungen und Vorgaben.

Wird die Drehrichtung der Pumpe 15 umgekehrt, die Verbindungsleitung 10, hin zum Vorratsbehälter 11 durch Öffnen des weiteren Absperrventils 12 geöffnet und das Absperrventil 3 und das zusätzliche Absperrventil 13 geschlossen, so wird der Behälter 1 aus dem Vorratsbehälter 11 über die Verbindungsleitung 10 mit Additiv befüllt, bis das Steuergerät aufgrund eines Signals der Füllstandsmesseinrichtung 8 den Befüllvorgang beendet.

Der Vorratsbehälter 11 besitzt eine selbstschließende Nachfüllöffnung 16, die als Kupplungsvorrichtung zur Verbindung mit einer nicht gezeichneten Einfülleinrichtung ausgebildet ist. So kann dieser sicher beim Service in der Werkstatt aufgefüllt werden.

Friert das Additiv aufgrund zu niedriger Umgebungstemperaturen ein, kann über das Steuergerät ein Auftauvorgang eingeleitet werden. Dazu verschließt das weitere Absperrventil 12 die Verbindungsleitung 10 vor dem Vorratsbehälter 11 und das Absperrventil 3 verschließt die Zuführleitung 4. Das geöffnete zusätzliche Absperrventil 13 ermöglicht der Pumpe 15 eine Entnahme von mittels der Heizeinrichtung 9 aufgetautem Additiv und ein Rückpumpen dessen in den Behälter 1 über die Rücklaufleitung 14. Da die Rücklaufleitung 14 oben im Behälter 1 endet, fließt das in den Behälter 1 zurück gepumpte Additiv dort über das gefrorene Additiv und taut dieses weiter auf. Bei leerem Behälter 1 und gefrorenem Additiv im Vorratsbehälter 11, wird ein Weiterbetreiben der Einrichtung dadurch ermöglicht, dass der Behälter 1 über die Nachfüllöffnung 7 von Hand mit Additiv nachfüllbar ist.

## Patentansprüche

1. Einrichtung zum Zuführen eines flüssigen Additivs aus einem Behälter (1) in eine Kraftstoffleitung oder in eine Abgasleitung (2) einer Brennkraftmaschine eines Kraftfahrzeugs, mittels einer, in mindestens eine der vorgenannten Leitungen mündenden, absperrbaren Zuführleitung (4) und mittels einer Pumpe (15), die mindestens zeitweilig einen Förderdruck in der Zuführleitung (4) erzeugt und im Behälter (1) oder zwischen dem Behälter (1) und dem Abzweig der Zuführleitung (4) in die Verbindungsleitung (10) eingebaut ist, wobei der Behälter (1) aus einem ebenfalls im Kraftfahrzeug untergebrachten größeren Vorratsbehälter (11) über eine absperrbare Verbindungsleitung (10) mit Additiv befüllbar ist, **dadurch gekennzeichnet, dass** die Zuführleitung (4) zwischen dem Behälter (1) und dem Vorratsbehälter (11) von der Verbindungsleitung (10) abzweigt und dass die Verbindungsleitung (10) im Vorratsbehälter (11) oder zwischen dem Vorratsbehälter (11) und dem Abzweig der Zuführleitung (4) absperrbar ist.

2. Einrichtung nach Anspruch 1, **dadurch gekennzeichnet, dass** die Förderrichtung der Pumpe (15) umkehrbar ist.

3. Einrichtung nach Anspruch 1 oder 2, **dadurch gekennzeichnet, dass** die absperrbaren Leitungen (4, 10, 14) mittels Absperrventilen (3,12,13), insbesondere Magnetventilen, absperrbar sind.

4. Einrichtung nach einem der Ansprüche 1 bis 3, **dadurch gekennzeichnet, dass** eine absperrbare Rücklaufleitung (14) in den Behälter (1) von der Verbindungsleitung (10) oder der Zuführleitung (4) zwischen der Pumpe (15) und den Absperrventilen (3,12,13) abzweigt.

5. Einrichtung nach einem der Ansprüche 1 bis 4, **dadurch gekennzeichnet, dass** sowohl der Behälter (1), als auch der Vorratsbehälter (11) mindestens eine verschliessbare, insbesondere von Hand und/oder selbstschließende, Nachfüllöffnung (7,16) besitzen.

6. Einrichtung nach Anspruch 5, **dadurch gekennzeichnet, dass** die, insbesondere selbstschließende, Nachfüllöffnung (7,16) als Kupplungsvorrichtung zur Verbindung mit einer Einfülleinrichtung ausgebildet ist.

7. Einrichtung nach einem der Ansprüche 1 bis 6, **dadurch gekennzeichnet, dass** im Behälter (1) eine Heizeinrichtung (9) zur Erwärmung mindestennes eines Teilvolumens des Additivs vorhanden ist.

8. Einrichtung nach Anspruch 7, **dadurch gekennzeichnet, dass** die Verbindungsleitung (10) in der Nähe der Heizeinrichtung (9), insbesondere im Bodenbereich, des Behälters (1) endet.

9. Einrichtung nach einem der Ansprüche 4 bis 8, **dadurch gekennzeichnet, dass** die Rücklaufleitung (14) oben im Behälter (1) endet.

10. Einrichtung nach einem der Ansprüche 1 bis 9, **dadurch gekennzeichnet, dass** im Behälter (1) eine Füllstandsmesseinrichtung (8) für das Additiv vorhanden ist.

11. Einrichtung nach einem der Ansprüche 1 bis 10, **dadurch gekennzeichnet, dass** der Behälter (1) im Motorraum und der Vorratsbehälter (11) außerhalb des Motorraums, insbesondere in einem Gepäck- oder Laderaum oder in einer Ersatzradmulde, untergebracht ist.

## Claims

1. A device for feeding a liquid additive from a container (1) into a fuel line or into an exhaust line (2) of an internal combustion engine of a motor vehicle, by means of a blockable feed line (4) opening into at least one of the aforementioned lines, and by means of a pump (15), which at least temporarily generates a conveying pressure in the feed line (4) and is fitted in the container (1) or between the container (1) and the branch-off of the feed line (4) into the connecting line (10), the container (1) being fillable with additive from a larger storage container (11) also accommodated in the motor vehicle via a blockable connecting line (10), **characterised in that** the feed line (4) branches off from the connecting line (10) between the container (1) and the storage container (11) and **in that** the connecting line (10) can be blocked in the storage container (11) or between the storage container (11) and the branch-off of the feed line (4).

2. A device according to claim 1, **characterised in that** the conveying direction of the pump (15) can be reversed.

3. A device according to claim 1 or 2, **characterised in that** the blockable lines (4, 10, 11) can be blocked by means of shut-off valves (3, 12, 13), more especially solenoid valves.

4. A device according to any one of claims 1 to 3, **characterised in that** a blockable return line (14) into the container (1) branches off from the connecting line (10) or the feed line (4) between the pump (15) and the shut-off valves (3, 12, 13).

5. A device according to any one of claims 1 to 4, **characterised in that** both the container (1) and the storage container (11) have at least one closable refill opening (7, 16) which, more especially, can be closed manually and/or is self-closing.

6. A device according to claim 5, **characterised in that** the, more especially, self-closing refill opening (7, 16) is configured as a coupling mechanism for connection to a filling device.

7. A device according to any one of claims 1 to 6, **characterised in that** a heating device (9) to heat at least a partial volume of the additive is present in the container (1).

8. A device according to claim 7, **characterised in that** the connecting line (10) ends close to the heating device (9), more especially in the base region, of the container (1).

9. A device according to any one of claims 4 to 8, **characterised in that** the return line (14) ends at the top of the container (1).

10. A device according to any one of claims 1 to 9, **characterised in that** a filling level measuring device (8) for the additive is present in the container (1).

11. A device according to any one of claims 1 to 10, **characterised in that** the container (1) is accommodated in the engine compartment and the storage container (11) is accommodated outside the engine compartment, more especially in a luggage or loading space or in a spare wheel well.

## Revendications

1. Dispositif d'introduction d'un additif liquide à partir d'un réservoir (1) dans une conduite de carburant ou une conduite de gaz d'échappement (2) d'un moteur à combustion interne d'un véhicule automobile au moyen d'une conduite (4) obturable aboutissant dans au moins une des conduites citées ci-dessus et au moyen d'une pompe (15) qui assure au moins temporairement une pression d'alimentation dans la conduite (4) et est montée dans le réservoir (1) ou entre le réservoir (1) et une bifurcation de la conduite (4) dans la conduite de liaison (10),
le réservoir (1) peut être rempli avec de l'additif à partir d'un plus grand réservoir d'alimentation (11) se trouvant également dans le véhicule par une conduite de liaison (10) obturable,
**caractérisé en ce que**
la conduite (4) bifurque à partir de la conduite de liaison (10) entre le réservoir (1) et le réservoir d'alimentation (11), et
la conduite de liaison (10) peut être obturée dans le réservoir (11) ou entre le réservoir d'alimentation (11) et la bifurcation de la conduite (4).

2. Dispositif selon la revendication 1,
**caractérisé en ce que**
le sens de transfert de la pompe (15) peut être inversé.

3. Dispositif selon la revendication 1 ou 2,
**caractérisé en ce que**
les conduites obturables (4, 10, 14) peuvent être obturées au moyen de soupapes d'obturation (3, 12, 13), en particulier d'électrovannes.

4. Dispositif selon l'une des revendications 1 à 3,
**caractérisé en ce qu'**
une conduite de retour (14) obturable bifurque, dans le réservoir (1) à partir de la conduite de liaison (10) ou de la conduite d'alimentation (4) entre la pompe (15) et les soupapes d'obturation (3, 12, 13).

5. Dispositif selon l'une des revendications 1 à 4,
**caractérisé en ce qu'**
aussi bien le réservoir (1) que le réservoir d'alimentation (11) comportent au moins une ouverture de remplissage (7, 16) obturable, en particulier manuellement et/ ou automatiquement.

6. Dispositif selon la revendication 5,
**caractérisé en ce que**
l'ouverture de remplissage (7, 16), en particulier auto-obturable, est réalisée comme dispositif de couplage relié avec un dispositif de remplissage.

7. Dispositif selon l'une des revendications 1 à 6,
**caractérisé en ce que**
le réservoir (1) comporte une installation de chauffage (9) pour le réchauffage d'au moins une partie du volume de l'additif.

8. Dispositif selon la revendication 7,
**caractérisé en ce que**
la conduite de liaison (10) se termine à proximité du dispositif de chauffage (9), en particulier dans la zone de fond du réservoir (1).

9. Dispositif selon l'une des revendications 4 à 8,
**caractérisé en ce que**
la conduite de retour (14) débouche dans la partie supérieure du réservoir (1).

10. Dispositif selon l'une des revendications 1 à 9,
**caractérisé en ce que**
le réservoir (1) comporte une installation de mesure de niveau de remplissage (8) pour l'additif.

11. Dispositif selon l'une des revendications 1 à 10,
**caractérisé en ce que**
le réservoir (1) se trouve dans l'espace du moteur et le réservoir d'alimentation (11) se trouve à l'extérieur de l'espace du moteur, en particulier dans un volume pour les bagages ou le chargement ou une cavité de roue de secours.
